# FASCICULE DE BREVET EUROPEEN

(11) **EP 3 551 364 B1**
(45) Date de publication et mention de la délivrance du brevet: **15.05.2024**
(21) Numéro de dépôt: 17822386.3
(22) Date de dépôt: 07.12.2017
(51) Int. Cl.: B22F 10/22, B22F 10/25, B22F 7/04, B22F 7/08, B23K 26/34, B22F 10/64, B22F 10/28, B22F 10/66

(54) **PROCEDE DE FABRICATION HYBRIDE D'UN ELEMENT DE STRUCTURE AVEC RAIDISSEUR(S)**
HYBRIDER HERSTELLUNGSPROZESS VON STUKTURELEMENT MIT VERSTEIFUNG(EN)
HYBRID MANUFACTURING MEHTOD OF A STRUCTURAL ELEMENT WITH STIFFNER(S)

(30) Priorité: 07.12.2016 FR 1662068
(43) Date de publication de la demande: 16.10.2019
(73) Titulaire: Constellium Issoire, 63500 Issoire (FR)
(72) Inventeur: EHRSTROM, Jean-Christophe, 38000 Grenoble (FR); CHEHAB, Bechir, 38500 Voiron (FR)
(74) Mandataire: Constellium - Propriété Industrielle
(86) Numéro de dépôt international: PCT/FR2017/053445
(87) Numéro de publication internationale: WO 2018/104673

(56) Documents cités:
- EP-A1- 2 801 512
- WO-A1-2016/001360
- FR-A1- 3 025 491
- US-A1- 2014 190 942
- US-A1- 2015 000 108
- US-A1- 2016 060 741

## Description

### DOMAINE TECHNIQUE

Le domaine technique de l'invention est la fabrication de pièces en métal ou en alliage métallique, en particulier en aluminium ou en alliage d'aluminium.

### ART ANTERIEUR

L'aluminium est un élément présent dans de nombreux domaines industriels, par exemple le bâtiment, l'industrie agroalimentaire, l'automobile ou l'aéronautique. En raison de sa légèreté, de sa tenue à la corrosion et de son aptitude à être mis en forme, il est couramment utilisé pour la réalisation d'éléments de structure, par exemple des ossatures dans les bâtiments ou des cadres ou des panneaux destinés à des véhicules, par exemple des automobiles ou des avions.

Certains éléments de structure sont des panneaux de fuselage, comportant une surface plane ou courbée, formant une peau, de laquelle font saillie des raidisseurs, ces derniers augmentant la rigidité du panneau. De façon générale, on fabrique séparément la peau et les raidisseurs, puis on procède à un assemblage de ces derniers, par exemple par des rivets ou des boulons. Cela représente un coût de main-d'oeuvre important, le nombre de rivets ou boulons à utiliser étant élevé.

De façon alternative, pour constituer un tel élément de structure en aluminium, une tôle massive, d'épaisseur par exemple comprise entre 30 et 100 mm, peut-être usinée. L'usinage permet de former à la fois la peau et les raidisseurs. Un tel procédé, dit d'usinage dans la masse, entraîne toutefois un retrait d'une grande quantité de matière. Le ratio entre la quantité de matière achetée sur la quantité de matière effectivement utilisée est défavorable, un tel ratio étant désigné, dans l'aéronautique, par le terme buy-to-fly ratio.

Depuis les années 80, les techniques de fabrication additive se sont développées, qui consistent à mettre en forme une pièce par ajout de matière, à l'opposé des techniques d'usinage, visant à enlever de la matière. Autrefois cantonnée au prototypage, la fabrication additive est à présent opérationnelle pour fabriquer des produits industriels en série, y compris des pièces métalliques.

La demande de brevet US20160136891 décrit le recours à un procédé de fabrication additive pour constituer la peau d'un fuselage. Selon ce procédé, on constitue une peau composite formée de deux couches d'aluminium entre lesquelles est disposée une couche de Titane. Après refroidissement, la peau prend une forme courbée.

La demande de brevet FR1458451 décrit un procédé de fabrication d'un panneau de fuselage d'avion, comportant une peau à partir de laquelle s'étendent des raidisseurs, la peau et les raidisseurs étant simultanément réalisés par fabrication additive. Un tel procédé est cependant coûteux en temps de dépôt de matière et difficilement compatible avec les exigences d'une peau de fuselage, notamment en tenue en fatigue et tolérance au dommage.

Dans des applications sensibles de type aéronautique, le matériau composant certaines parties de pièces, dites parties critiques, doit être maîtrisé de façon à répondre à des exigences précises en matière de propriétés mécaniques. Les parties critiques sont notamment les parties d'une pièce pouvant être exposées à des sollicitations mécaniques importantes. Les techniques de fabrication additive peuvent ne pas répondre aux exigences, en matière de propriétés mécaniques, visant les parties critiques de certaines pièces.

L'invention répond aux limites des procédés de l'art antérieur, et propose un procédé de fabrication optimisé.

### EXPOSE DE L'INVENTION

L'invention est exposée dans le jeu de revendications joint.

Un premier objet de la divulgation, ne faisant pas partie de l'invention, est un procédé de fabrication d'un élément de structure à partir d'une pièce dite de base métallique, l'élément de structure, comportant une peau, s'étendant entre une surface interne et une surface externe, et au moins un raidisseur, le raidisseur s'étendant à partir de la peau, jusqu'à une extrémité distale, le procédé comportant les étapes suivantes :
a) obtention d'une pièce de travail à partir de la pièce de base, ladite pièce de base étant une tôle obtenue par coulée puis laminage ;
b) usinage de la pièce de travail, de façon à former :
   - une peau, s'étendant entre une surface interne et une surface externe ;
   - au moins une ébauche de raidisseur, s'étendant à partir de la surface interne jusqu'à une extrémité distale, selon une direction d'extension sécante à la surface interne, l'extrémité distale étant disposée à une première distance, dite première distance d'extension, de la surface interne ;
c) addition de matière sur l'extrémité de l'ébauche de raidisseur formée lors de l'étape b), de façon à prolonger l'ébauche de raidisseur selon la direction d'extension, pour obtenir un raidisseur dont l'extrémité distale s'étend à une deuxième distance d'extension de la surface interne, la deuxième distance d'extension étant supérieure à 1,5 fois la première distance d'extension, l'addition de matière étant réalisée par fabrication additive, en ajoutant successivement des couches élémentaires de matière.

Ainsi, au cours de l'étape c), l'addition de matière déplace l'extrémité distale de l'ébauche du raidisseur relativement à la surface interne, pour obtenir le raidisseur.

Par peau, on entend une plaque de matière plane ou courbée, délimitée par une surface interne et une surface externe, l'épaisseur de la peau étant inférieure à 2 cm, voire à 1 cm. La surface interne et la surface externe s'étendent de préférence parallèlement, ou sensiblement parallèlement l'une par rapport à l'autre. Le terme sensiblement parallèlement signifie parallèle à une tolérance près, cette dernière pouvant être une tolérance angulaire de ±10° ou ±20°.

Par s'étendre à partir de la peau, on entend faire saillie à partir de la peau.

De préférence, à l'issue de l'étape c), la deuxième distance d'extension est supérieure à deux fois, voire trois fois l'épaisseur de la peau.

De préférence, la première distance d'extension d₁ peut être par exemple comprise entre 1 cm et 10 cm ou entre 1 cm et 5 cm ou entre 2 cm et 4 cm. Un premier objet de l'invention est un procédé de fabrication d'un élément de structure à partir d'une pièce dite de base métallique, l'élément de structure, comportant une peau et au moins un raidisseur, le raidisseur s'étendant, à partir de la peau, jusqu'à une extrémité distale, le procédé comportant les étapes suivantes :
a) obtention d'une pièce de travail à partir de la pièce de base, ladite pièce de base étant une tôle obtenue par coulée puis laminage ;
b) addition de matière sur la pièce de travail, de façon à former au moins une ébauche de raidisseur s'étendant à partir de la pièce de travail jusqu'à une extrémité distale, selon une direction d'extension sécante à ladite pièce de travail, l'extrémité distale étant disposée à une distance, dite première distance d'extension, de ladite pièce de travail, l'addition de matière étant réalisée par fabrication additive, en ajoutant successivement des couches élémentaires de matière ;
c) usinage de la pièce de travail, pour amincir la pièce de travail, autour de l'ébauche formée lors de l'étape b), la pièce de travail ainsi amincie formant une peau, s'étendant entre une surface interne et une surface externe, l'usinage ayant pour effet de prolonger l'ébauche de raidisseur jusqu'à la surface interne, de façon à obtenir un raidisseur dont l'extrémité distale s'étend à une deuxième distance d'extension de la surface interne, la deuxième distance d'extension étant supérieure à 1,5 fois la première distance d'extension.

De préférence, la différence entre la deuxième distance d'extension et la première distance d'extension (d2-d1) peut être par exemple comprise entre 1 cm et 10 cm ou entre 1 cm et 5 cm ou entre 2 cm et 4 cm.

Le concept commun de ces procédés est la combinaison de deux techniques pour former une peau, de laquelle s'étendent un ou plusieurs raidisseurs : une technique classique d'usinage, aux performances reconnues, permettant de former une partie de chaque raidisseur, dite proximale, disposée à proximité de la peau. Chaque procédé combine l'usinage et une technique de fabrication additive, l'usinage étant effectué soit avant, soit après la fabrication additive. L'extrémité distale de chaque raidisseur est obtenue par addition de matière, préalablement à l'usinage ou suite à l'usinage. Le procédé peut être mis en oeuvre à partir d'une pièce de base moins épaisse que dans l'art antérieur, en optimisant notamment la quantité de matière formant l'élément de structure par rapport à la quantité de matière formant la pièce de base. Le recours à une pièce de base moins épaisse permet également une meilleure maîtrise des propriétés mécaniques, en particulier au niveau des parties de l'élément de structure exposées aux contraintes les plus importantes, comme décrit ci-après.

Chaque procédé de fabrication peut comporter l'une des caractéristiques suivantes, prises isolément ou selon les combinaisons techniquement réalisables :
- La pièce de travail correspond à la pièce de base.
- L'étape a) comporte :
   l'application d'un traitement thermomécanique à la pièce de base ou à la pièce de travail; il peut notamment s'agir d'une mise en solution suivie d'une trempe.
   et/ou une mise en forme de la pièce de base. La mise en forme peut comporter une déformation pour obtenir une pièce de travail de forme galbée.
- Le procédé comporte, suite à l'étape c), un revenu.
- Lors de la fabrication additive, l'épaisseur de chaque couche élémentaire successivement ajoutée est de préférence comprise entre 10 µm et 5 mm.
- Suite à l'étape c), le procédé comporte une étape d'usinage, dit usinage de finition.
- La pièce de base est en alliage à base d'aluminium ou de titane ou de magnésium.
- Lors de l'étape d'addition de matière, la matière ajoutée est un alliage d'aluminium ou de titane ou de magnésium.

Un autre objet de l'invention est un élément de structure, destiné à une structure d'une construction, caractérisé en ce qu'il est réalisé en mettant en oeuvre le procédé décrit dans cette demande.

Un autre objet de l'invention est un véhicule, destiné à un transport terrestre, maritime ou aérien, voire spatial, dont la structure métallique comporte au moins un élément de structure réalisé selon le procédé décrit dans cette demande.

D'autres avantages et caractéristiques ressortiront plus clairement de la description de modes particuliers de réalisation de l'invention, donnés à titre d'exemples non limitatifs, et représentés sur les figures listées ci-dessous.

### FIGURES

Les figures 1 et 2 représentent des modes de réalisation qui ne font pas partie de l'invention, les figures 3 et 4 représentent des modes de réalisation suivant l'invention,
La figure 1A représente les principales étapes d'un premier mode de réalisation. Les figures 1B, 1C, 1D et 1E sont des coupes selon un plan XZ illustrant les différentes étapes du premier mode de réalisation. La figure 1F schématise un élément structurel obtenu selon le premier mode de réalisation. La figure 1G est un schéma représentatif d'un procédé d'addition de matière pouvant être mis en oeuvre.
La figure 2A représente les principales étapes d'une variante du premier mode de réalisation. Les figures 2B, 2C, 2D et 2E sont des coupes selon un plan XZ illustrant les différentes étapes de cette variante. La figure 2F schématise un élément structurel obtenu selon cette variante.
La figure 3A représente les principales étapes d'un deuxième mode de réalisation. Les figures 3B, 3C et 3D sont des coupes selon un plan XZ illustrant les différentes étapes du deuxième mode de réalisation. La figure 3E schématise un élément structurel obtenu selon le deuxième mode de réalisation.
La figure 4A représente les principales étapes d'une variante du deuxième mode de réalisation. Les figures 4B, 4C, et 4D sont des coupes selon un plan XZ illustrant les différentes étapes de cette variante. La figure 4E schématise un élément structurel obtenu selon cette variante.

### EXPOSE DE MODES DE REALISATION PARTICULIERS

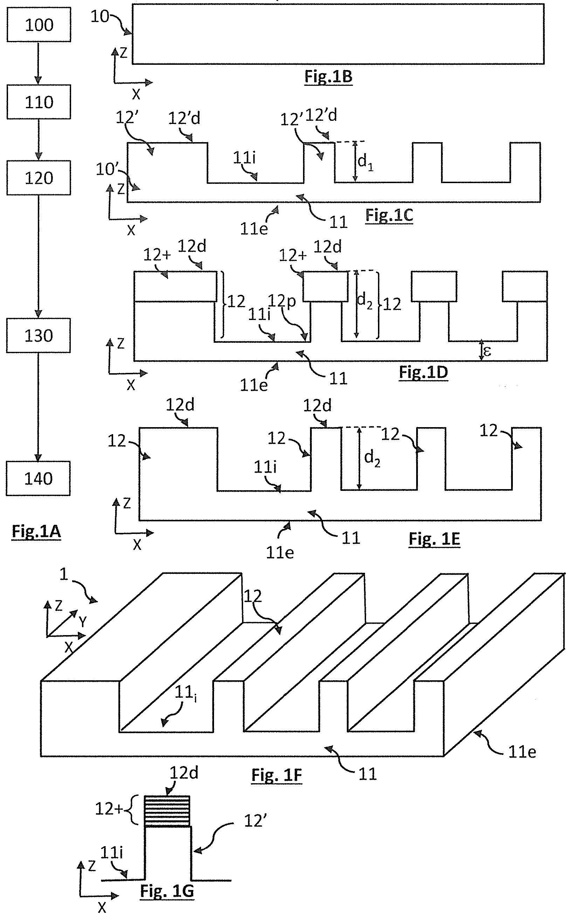

La figure 1A décrit les principales étapes de fabrication d'un élément de structure 1 de type panneau, comportant une peau 11 de laquelle des raidisseurs 12 font saillie, cet élément de structure étant schématisé sur la figure 1F. Le terme élément de structure désigne un élément destiné à la construction mécanique, dont les caractéristiques mécaniques sont importantes pour garantir l'intégrité de la structure de ladite construction.

Dans cet exemple, qui ne fait pas partie de l'invention, l'élément de structure 1 est destiné à la construction d'un aéronef, en particulier un avion. Il s'agit ici d'un panneau destiné à former un élément de structure tel qu'un fuselage, une porte, un cadre de porte, un plancher, une trappe, une cloison, une aile d'avion ou tout autre élément de voilure de type dérive, empennage, volet, gouverne, cette liste n'étant pas exhaustive. Les raidisseurs 12 sont destinés à conférer une certaine rigidité et/ou une certaine résistance mécanique au panneau 1. Les raidisseurs 12 peuvent également être désignés par les termes longerons ou nervures. L'épaisseur de la peau 11, selon un axe transversal Z représenté, peut être comprise entre 0,5 mm, voire 0,8 cm et 1 cm, voire 1,5 cm ou 4 cm, tandis que la hauteur d'un raidisseur 12, selon le même axe, peut être comprise entre 1cm et 10cm ou entre 1 cm et 20 cm. Dans cet exemple, le raidisseur est rectiligne et s'étend selon l'axe longitudinal Y. Les dimensions du panneau 1, dans un plan XY, peuvent atteindre 5m x 20m, voire davantage. L'exemple d'un raidisseur rectiligne est un exemple particulier non limitatif et la divulgation s'applique également à l'obtention d'un raidisseur non rectiligne. Les principales étapes du procédé sont les suivantes :
Etape 100 (fig. 1B) : obtention d'une pièce de base 10, notamment une tôle, de matériau métallique, par exemple en alliage à base d'aluminium, ou de titane ou de magnésium. Dans la suite de la description, le terme aluminium désigne l'aluminium ou un alliage d'aluminium, en particulier un alliage de type 2XXX, 5XXX, 6XXX ou 7XXX, tels que définis par The Aluminium Association connue de l'homme du métier. L'épaisseur ε de la pièce de base, selon l'axe transversal Z, est de préférence inférieure à 100 mm, et est de préférence comprise entre 5 mm et 50 mm. La pièce de base 10 est obtenue par laminage. L'épaisseur de la pièce de base est donc faible, en comparaison avec les procédés de fabrication, décrits dans l'art antérieur, dits d'usinage dans la masse.
Etape 110 : obtention d'une pièce de travail 10' à partir de la pièce de base 10. Au cours de cette étape optionnelle la pièce de base 10 obtenue suite à l'étape précédente peut être faire l'objet d'une mise en forme et/ou un ajustement de ses dimensions, de façon à obtenir une pièce de travail 10'. Cette étape peut également comprendre un traitement thermomécanique, c'est-à-dire un traitement thermique et/ou mécanique, comportant en particulier, pour les alliages à durcissement structural une mise en solution suivie d'une trempe, avant une étape de détensionnement par traction puis d'un revenu. Le traitement thermomécanique peut être mis en oeuvre avant ou après la mise en forme de la pièce de base 10 ou l'ajustement de ses dimensions.

La mise en solution est un traitement thermomécanique connu de l'homme du métier. Ce traitement revient à chauffer un alliage durant une durée suffisante pour permettre une dissolution de précipités présents dans l'alliage de façon à ce que des éléments d'alliage, présents dans l'alliage, soient en une solution solide. La température de mise en solution dépend de l'alliage. Une mise en solution est suivie d'une trempe, au cours de laquelle l'alliage est refroidi rapidement, de façon à conserver une répartition homogène des éléments d'alliage. On peut obtenir, lors d'une étape ultérieure de vieillissement naturel ou artificiel, ou revenu, un durcissement par précipitation. Les conditions de mise en solution, de trempe, de détensionnement et de revenu sont déterminées par l'homme du métier en fonction de l'alliage et des dimensions de la pièce.

Le traitement thermomécanique peut être réalisé dans des étapes successives ou séparées. Ainsi avantageusement, les étapes de mise en solution et trempe sont réalisées lors de l'étape 110 alors que le revenu est effectué à un stade ultérieur du procédé, comme décrit ci-après.

Le procédé peut ne comporter ni déformation, ni traitement thermomécanique, ni ajustement des dimensions, auquel cas la pièce de travail 10' correspond à la pièce de base 10.

Etape 120 (fig. 1C): usinage. La pièce de travail fait l'objet d'un usinage, le terme usinage désignant un enlèvement de matière de façon à constituer une forme prédéterminée. Il s'agit en particulier d'un procédé de type tournage, fraisage, alésage, électroérosion, rectification, ou polissage. L'usinage est réalisé de façon à former une peau 11 s'étendant, selon l'axe transversal Z, entre une surface externe 11e et une surface interne 11i. L'épaisseur de la peau est préférentiellement inférieure à 4 cm, 2 cm, voire 1,5 cm ou 1 cm. L'usinage permet également de former au moins une ébauche de raidisseur 12', s'étendant, selon l'axe transversal Z, entre la surface interne 11i et une extrémité dite extrémité distale 12'd. L'extrémité distale 12'd de l'ébauche de raidisseur 12' s'étend à une distance d₁, dite première distance d'extension, de la surface interne 11i. La première distance d'extension d₁ peut être par exemple comprise entre 1 cm et 5 cm, ou entre 1 cm et 10 cm. Dans cet exemple, l'ébauche de raidisseur 12' s'étend selon une direction d'extension correspondant à l'axe transversal Z, ce dernier étant perpendiculaire à la surface interne 11i. Une autre direction d'extension, sécante de la surface interne 11i, est envisageable. De préférence, plusieurs ébauches de raidisseurs 12' sont simultanément formées au cours de cette étape.

Contrairement au procédé décrit dans la demande WO2004/056501, les traitements thermomécaniques, décrits en lien avec l'étape 110, ne sont pas réalisés suite à l'étape 120, c'est-à-dire après l'usinage, mais présentent néanmoins l'avantage d'être réalisés sur une pièce de base de faible épaisseur. Ainsi, dans le procédé selon la divulgation, il n'est pas nécessaire de réaliser d'étape de détensionnement sur un produit usiné de forme complexe, comme décrit dans WO2004/056501, ce qui peut s'avérer difficile industriellement.

Etape 130 (fig. 1D) : addition de matière. Cette étape vise à prolonger l'ébauche de raidisseur 12', selon la direction d'extension, de façon à éloigner l'extrémité distale 12'd de la surface interne 11i. A l'issue de cette étape, on obtient un raidisseur 12, dont l'extrémité distale 12d s'étend à une distance d₂ de la surface interne 11i, dite deuxième distance d'extension, supérieure à la première distance d'extension d₁. La deuxième distance d'extension d₂ peut être supérieure à 1,5 fois, voire 2 fois la première distance d'extension d₁, voire davantage. L'étape 130 peut conduire à augmenter la distance d'extension de plus de 10 mm, voire plus de 30mm. Autrement dit, d₂ ≥ d₁ + 10 mm, ou d₂ ≥ d₁ + 30 mm. La quantité de matière ajoutée 12+ est donc de préférence supérieure à 10 mm, voire supérieure à 30 mm. A l'issue de cette étape, chaque raidisseur 12 formé s'étend entre une extrémité proximale 12p, au contact de la surface interne 11i, et l'extrémité distale 12d formée par l'addition de matière.

L'addition de matière est réalisée par fabrication additive, comme représenté sur la figure 1G, à partir d'un modèle numérique établi préalablement. Le terme fabrication additive est défini selon la norme française XP E67-001 : "ensemble des procédés permettant de fabriquer, couche par couche, par ajout de matière, un objet physique à partir d'un objet numérique". La norme ASTM F2792-10 définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015006447. L'application de couches successives, dites couches élémentaires, peut être réalisée par application d'un matériau dit d'apport sur l'extrémité 12d, puis fusion ou frittage du matériau d'apport à l'aide d'une source d'énergie de type faisceau laser, faisceau d'électrons, torche plasma ou arc électrique. Le matériau d'apport peut se présenter sous la forme d'une poudre ou d'un fil, ou encore d'une tige ou d'un feuillard. La publication Gu J. "Wire+Arc Additive Manufacturing of Aluminium" Proc. 25th Int. Solid Freeform Fabrication Symp., August 2014, University of Texas, 451-458, décrit un exemple d'application d'une modalité de fabrication additive désignée par le terme WAAM, acronyme de "Wire+Arc Additive Manufacturing" sur des alliages d'aluminium pour la constitution de pièces de faible porosité destinées au domaine de l'aéronautique. Parmi les autres méthodes utilisables, citons par exemple, et de façon non limitative, la fusion ou le frittage d'un matériau d'apport prenant la forme d'une poudre. Il peut s'agir de fusion ou de frittage laser. La société suédoise Arcam a mis au point un procédé de fabrication additive de type fusion par faisceau d'électrons dédié à la production de composants aéronautiques, par exemple des aubes de turbine. La publication T. Mahale, "Advances in Electron Beam melting of Aluminum Alloy," Proceedings of Solid Freeform Fabrication Symposium 2007, Austin, TX, décrit l'application de la fusion par faisceau d'électrons sur des alliages d'aluminium pour réaliser des pièces pour l'aéronautique. Une autre méthode connue de fabrication additive est la fabrication additive par friction malaxage, usuellement désignée par le terme anglosaxon "friction stir additive manufacturing". Cette méthode est par exemple décrite dans Puleo, Shawn Michael, "Additive Friction Stir Manufacturing of 7055 Aluminum Alloy" (2016). Senior Honors Theses. Paper 75, ou dans le document US2014/0134325.

Quelle que soit la modalité de fabrication additive appliquée, l'épaisseur de chaque couche élémentaire ajoutée est typiquement au moins de l'ordre de 10 microns et peut également atteindre quelques millimètres, par exemple 5 mm. On assiste alors à une formation progressive, couche par couche, d'une pièce additionnelle 12+ sur l'ébauche de raidisseur 12'.

Les différentes couches élémentaires peuvent être constituées d'un même matériau. Selon une variante, les couches élémentaires ne sont pas constituées d'un même matériau, le matériau constituant une couche élémentaire pouvant varier d'une couche élémentaire à une autre. Chaque couche élémentaire peut être de même épaisseur. Selon une variante, des couches élémentaires peuvent être d'épaisseurs différentes.

L'étape 130 peut également comprendre un traitement thermomécanique suite à l'addition de matière. Il peut s'agir par exemple d'une déformation par compression, par exemple une compression isostatique à chaud. Cela permet de combler des pores formés lors de l'addition de matière.

Etape 140 (fig. 1E) : Finition. Cette étape peut comprendre un usinage dit de finition, de la pièce obtenue suite à l'étape 130, de façon à obtenir un état de surface compatible avec l'utilisation finale visée. Selon une variante, l'étape 140 peut comprendre une étape de revenu avant ou, et de préférence, après l'usinage de finition.

Le procédé ne nécessite pas le recours à une pièce de base 10 de forte épaisseur, par comparaison aux procédés de l'art antérieur selon lesquels la peau 11 et les raidisseurs 12 sont usinés dans la masse à partir d'une même pièce de base. Selon la divulgation, la pièce de base doit avoir une épaisseur, selon l'axe transversal Z, supérieure ou égale à l'épaisseur de la peau 11 ajoutée de l'épaisseur de l'ébauche de raidisseur 12', c'est-à-dire l'épaisseur de la peau 11 et de la première distance d'extension d₁. Cela permet une amélioration du ratio buy to fly précédemment évoqué. L'épaisseur de la pièce de base 10 peut être réduite d'un facteur supérieur ou égal à 2. Par exemple, pour fabriquer un panneau dont l'épaisseur totale s'élève à 70 mm, selon un procédé d'usinage dans la masse de l'art antérieur, on utilise une pièce de base dont l'épaisseur est d'environ 75 mm. En mettant en oeuvre la divulgation, l'épaisseur de la pièce de base peut être ramenée à 30 mm, au lieu de 75 mm, soit un gain en épaisseur de 45 mm. L'épaisseur totale de 70 mm correspond à l'épaisseur ε de la peau 11 additionnée de la hauteur des raidisseurs, c'est-à-dire la deuxième distance d'extension d₂ décrite ci-avant.

Un autre avantage lié à l'utilisation d'une pièce de base moins épaisse est lié à l'influence du traitement thermomécanique sur les propriétés mécaniques. Le traitement thermomécanique, qu'il soit appliqué lors de l'étape 110 ou suite à l'étape 120, ou au cours de l'étape 140, est réalisé sur une pièce de travail dont l'épaisseur est réduite par rapport à l'art antérieur. On sait que l'efficacité des traitements thermomécaniques est limitée par l'épaisseur de la pièce traitée, dans la mesure où des vitesses de trempe moins élevées sont obtenues sur des pièces plus épaisses. L'application d'un traitement thermomécanique sur une pièce plus mince favorise l'obtention de propriétés mécaniques plus avantageuses. Ces propriétés mécaniques sont également plus prévisibles, car moins soumises aux fluctuations liées à la diffusion thermique. En outre, cela diminue la durée du traitement thermomécanique, ce qui augmente l'efficacité du procédé et diminue les coûts engendrés. Les propriétés mécaniques sont ainsi maîtrisées, en particulier au niveau des parties les plus critiques de la pièce, correspondant à la peau 10 ou à l'interface entre la peau 10 et les raidisseurs 12 (c'est-à-dire au niveau de l'extrémité proximale 12p des raidisseurs), sur lesquelles les contraintes mécaniques peuvent être importantes. Si le dépôt de matière était réalisé directement sur la peau, la jonction entre la peau et le raidisseur ajouté serait située au niveau d'une partie critique vis-à-vis de la tenue en fatigue notamment.

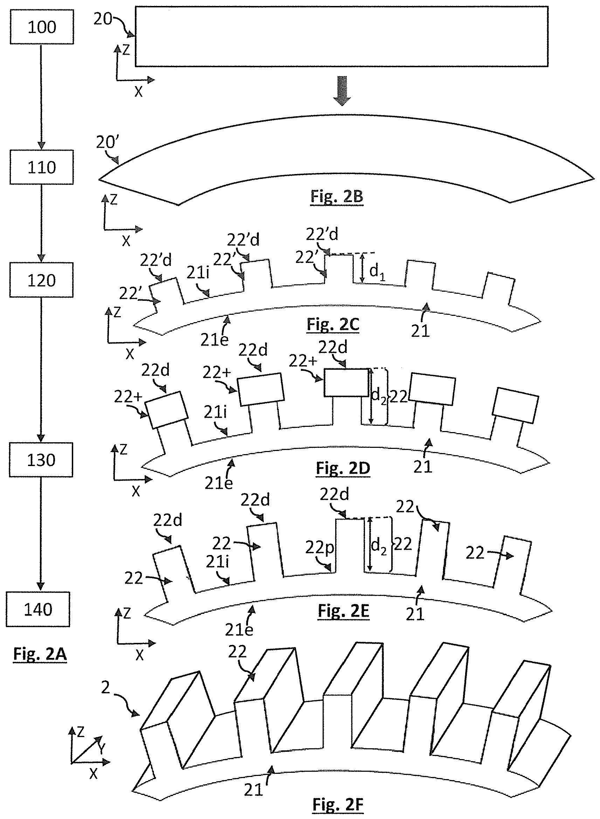

Une autre conséquence de la réduction de l'épaisseur de la pièce de base est que cette dernière est plus facile à mettre en forme, comme illustré dans une variante du premier mode de réalisation, décrite ci-dessous, en lien avec les figures 2A à 2F. L'objectif est d'obtenir un élément de structure 2 dont la peau n'est pas plane, mais épouse une forme courbe, par exemple en étant galbée, comme schématisée sur la figure 2F. Une telle forme peut être adaptée à un fuselage, un cadre de porte ou un élément de voilure. Les étapes 100 à 150 de cette variante sont respectivement similaires aux étapes 100 à 150 précédemment décrites. La principale différence est que le procédé comporte, lors de l'étape 110, une déformation de la pièce de base, de façon à ce qu'elle épouse la forme courbe prédéfinie. On a calculé que la force à appliquer pour déformer une pièce d'épaisseur 30 mm peut être significativement inférieure à celle nécessaire pour obtenir une déformation similaire d'une pièce d'épaisseur 75 mm. Le gain obtenu peut être supérieur à 5 ou 6, c'est-à-dire que la force exercée pour obtenir la déformation est au moins 5 ou 6 fois inférieure.

A partir d'une pièce de base 20 (étape 100), une étape de déformation est appliquée (étape 110
- figure 2B) de façon à obtenir une pièce de travail courbée 20'. On met alors en oeuvre les étapes suivantes :
   - Etape 120 (figure 2C) : usinage, de façon à former une peau courbée 21 s'étendant, selon l'axe transversal Z, entre une surface externe (ou peau externe) 21e et une surface interne (ou peau interne) 21i. L'usinage permet également de former au moins une ébauche de raidisseur 22', s'étendant, selon une direction d'extension perpendiculaire à la surface interne 21i, entre ladite surface interne 21i et une extrémité dite extrémité distale 22'd. L'extrémité distale 22'd de l'ébauche de raidisseur 22' s'étend à une distance d₁, dite première distance d'extension, de la surface interne 21i.
   - Etape 130 (figure 2D) : addition de matière 22+ pour prolonger l'ébauche de raidisseur 22', selon la direction d'extension, de façon à éloigner l'extrémité distale 22'd de la surface interne 21i. A l'issue de cette étape, on obtient un raidisseur 22, dont l'extrémité distale 22d s'étend à une distance d₂ de la surface interne 21i dite deuxième distance d'extension, supérieure à la première distance d'extension d₁. Cette étape est identique à ce qui a été décrit en lien avec la figure 1D. Le raidisseur 22 comporte une extrémité proximale 22p au contact de la surface interne 21i.
   - Etape 140 (figure 2E): usinage de finition, de façon identique à ce qui a été décrit en lien avec la figure 1E.

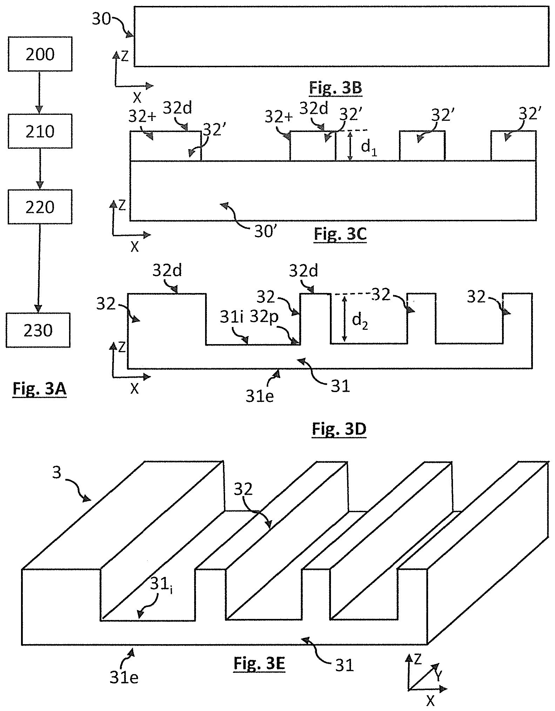

La figure 3A représente un deuxième mode de réalisation, celui-ci faisant partie de l'invention, visant à obtenir un panneau 3 tel que représenté sur la figure 3E, ce dernier étant identique à celui représenté sur la figure 1F. Selon ce troisième mode de réalisation, le procédé comporte les étapes suivantes :
- Etape 200 (fig. 3B) : obtention d'une pièce de base 30, comme décrit en lien avec l'étape 100 du premier mode de réalisation.
- Etape 210 : traitement de la pièce de base 30, de façon à obtenir une pièce de travail 30', de façon identique à l'étape 110 du premier mode de réalisation. Cette étape peut comporter une déformation, un ajustement des dimensions ou les traitements thermomécaniques précédemment décrits, en lien avec l'étape 110.
- Etape 220 (fig. 3C) : addition de matière 32+ sur la pièce de travail 30'. Cette étape permet de former une ébauche de raidisseur 32' s'étendant, selon l'axe transversal Z, entre la pièce de travail 30' et une extrémité, dite extrémité distale 32d. L'extrémité distale de l'ébauche de raidisseur 32d s'étend à une distance d₁, dite première distance d'extension, de la pièce de travail 30'. La première distance d'extension d₁ peut être par exemple comprise entre 1 cm et 5 cm à 10 cm. Dans cet exemple, l'ébauche de raidisseur 32' s'étend selon une direction d'extension correspondant à l'axe transversal Z, ce dernier étant perpendiculaire à la surface interne 31i. Une autre direction d'extension, sécante de la surface interne 31i, est envisageable. L'addition de matière est réalisée selon l'une des méthodes décrites dans l'étape 120.
- Etape 230 (fig. 3D) : usinage de la pièce de travail 30', autour de chaque ébauche de raidisseur 32' formée lors de l'étape 220, de façon à amincir la pièce de travail et former une peau 31 s'étendant entre une surface externe 31e et une surface interne 31i. L'épaisseur de la peau 31 est inférieure à 2 cm, voire 1,5 cm ou 1 cm. Lorsqu'au cours de l'étape 220, plusieurs ébauches de raidisseurs sont formées, l'usinage de la pièce de travail 30' est effectué entre deux ébauches adjacentes. L'usinage permet de prolonger chaque ébauche 32' de raidisseur 32 jusqu'à la surface interne 31i de la peau. La prolongation de chaque ébauche 32' permet de former un raidisseur 32 s'étendant une extrémité proximale 32p, au niveau de la surface interne 31i, et une extrémité distale 32d. L'extrémité distale 32d du raidisseur 32 est identique à l'extrémité distale de l'ébauche 32' lui correspondant. La distance entre l'extrémité distale 32d et la surface interne 11i, dite deuxième distance d'extension d₂, est supérieure à la première distance d'extension d₁. De façon commune avec le premier mode de réalisation, la deuxième distance d'extension d₂ est supérieure à 1,5 fois, voire 2 fois la première distance d'extension d₁, voire davantage. L'étape 230 peut conduire à augmenter la distance d'extension de plus de 10 mm, voire plus de 30mm. La deuxième distance d'extension correspond à la hauteur du raidisseur.

Le procédé peut faire l'objet d'un usinage, dit de finition, de façon à améliorer l'état de surface de la pièce obtenue. Il peut également faire l'objet d'un revenu avant ou après l'usinage de finition.

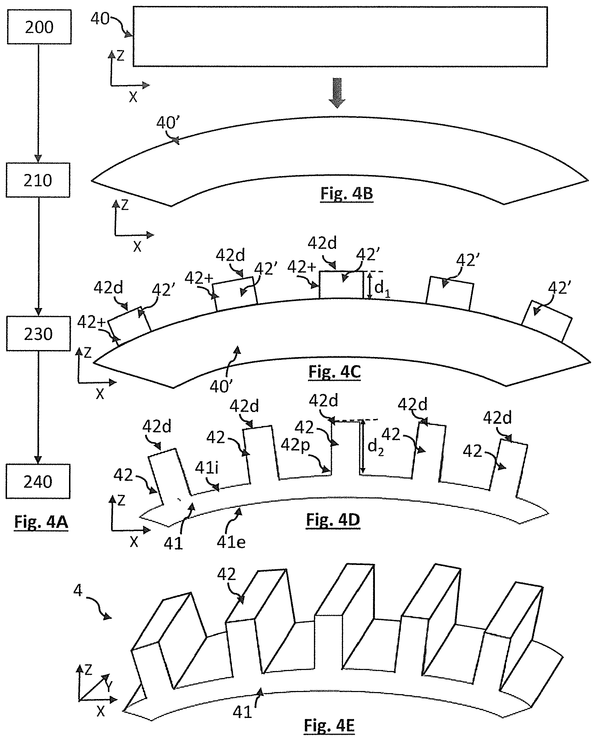

La figure 4A montre les principales étapes d'une variante du deuxième mode de réalisation, permettant l'obtention d'un panneau galbé 4, comme représenté sur la figure 4E. La principale différence avec le troisième mode de réalisation réside dans l'étape 210, au cours de laquelle une pièce de base 40 est déformée de façon à obtenir une pièce de travail 40' épousant une forme prédéterminée, en l'occurrence une forme galbée (fig. 4B). Les autres étapes sont similaires :
- Etape 220 (fig. 4C) : cette étape est similaire à l'étape 220 précédemment décrite. Elle comprend la formation d'ébauches de raidisseurs 42' par addition de matière 42+ sur la pièce de travail 40', la distance entre l'extrémité distale 42d de chaque ébauche 42'et la pièce de travail étant une première distance d'extension d₁. La direction d'extension est perpendiculaire à la surface de la pièce de base 40' sur laquelle sont formées les ébauches de raidisseurs.
- Etape 230 (fig. 4D): cette étape est identique à l'étape 230 précédemment décrite. Elle comprend un usinage de la pièce de base 40', de façon à former une peau 41, s'étendant entre une surface externe 41e et une surface interne 41i. Cela prolonge les ébauches de raidisseurs 42' jusqu'à la peau 41. La prolongation de chaque ébauche 42' permet de former un raidisseur 42 s'étendant une extrémité proximale 42p, au niveau de la surface interne 41i, et une extrémité distale 42d. L'extrémité distale 42d du raidisseur 42 est identique à l'extrémité distale de l'ébauche 42' lui correspondant. La distance entre l'extrémité distale 42d et la surface interne 41i, dite deuxième distance d'extension d₂, est supérieure à la première distance d'extension d₁.

Le procédé peut faire l'objet d'un usinage, dit de finition, de façon à améliorer l'état de surface de la pièce obtenue. Il peut également faire l'objet d'un revenu avant ou après l'usinage de finition.

L'invention pourra être mise en oeuvre pour réaliser des éléments de structure de bâtiments ou de véhicules, destinés à un transport terrestre, maritime ou aérien, et en particulier dans la fabrication d'éléments de structure pour des fuselages ou des voilures d'avions. Elle est en particulier destinée à être mise en oeuvre pour réaliser des éléments de structure en aluminium ou alliage d'aluminium, à partir d'une pièce de base en aluminium, la matière additionnelle ajoutée au cours de l'étape d'addition étant également de l'aluminium ou un alliage d'aluminium.

## Revendications

1. Procédé de fabrication d'un élément de structure (3, 4) à partir d'une pièce dite de base métallique (30, 40), l'élément de structure, comportant une peau (31, 41) et au moins un raidisseur (32, 42), le raidisseur s'étendant, à partir de la peau, jusqu'à une extrémité distale (32d, 42d), le procédé comportant les étapes suivantes :
a) obtention d'une pièce de travail (30', 40') à partir de la pièce de base (30, 40), ladite pièce de base étant une tôle obtenue par coulée puis laminage;
b) addition de matière (32+, 42+) sur la pièce de travail, de façon à former au moins une ébauche de raidisseur (32', 42') s'étendant à partir de la pièce de travail jusqu'à une extrémité distale (32d, 42d), selon une direction d'extension sécante à ladite pièce de travail, l'extrémité distale étant disposée à une distance (d₁), dite première distance d'extension, de ladite pièce de travail, l'addition de matière étant réalisée par fabrication additive, en ajoutant successivement des couches élémentaires de matière;
c) usinage de la pièce de travail (30', 40'), pour amincir la pièce de travail, autour de l'ébauche de raidisseur formée lors de l'étape b), la pièce de travail ainsi amincie formant une peau (31, 41), s'étendant entre une surface interne (31i, 41i) et une surface externe (31e, 41e), l'usinage ayant pour effet de prolonger l'ébauche de raidisseur (32', 42') jusqu'à la surface interne, de façon à obtenir un raidisseur (32,42) dont l'extrémité distale (32d, 42d) s'étend selon une deuxième distance d'extension (d₂) de la surface interne, la deuxième distance d'extension (d₂) étant supérieure à 1,5 fois la première distance d'extension (d₁).

2. Procédé de fabrication selon la revendication 1, dans lequel la pièce de travail (30', 40') correspond à la pièce de base.

3. Procédé de fabrication selon la revendication 1, dans lequel l'étape a) comporte :
- l'application d'un traitement thermomécanique à la pièce de base (30, 40) ou à la pièce de travail (30', 40');
- et/ou une mise en forme de la pièce de base (30, 40).

4. Procédé de fabrication selon la revendication 3, dans lequel la mise en forme comporte une déformation pour obtenir une pièce de travail (, 40') de forme galbée.

5. Procédé de fabrication selon la revendication 4, dans lequel le traitement thermomécanique comporte une mise en solution suivie d'une trempe.

6. Procédé de fabrication selon l'une quelconque des revendications précédentes, comportant, suite à l'étape c), un revenu.

7. Procédé de fabrication selon l'une quelconque des revendications précédentes comportant, suite à l'étape c), une étape d'usinage dit de finition.

8. Procédé de fabrication selon l'une quelconque des revendications précédentes, dans lequel chaque couche de matière successivement ajoutée a une épaisseur comprise entre 10 µm et 5 mm.

9. Procédé de fabrication selon l'une quelconque des revendications précédentes, dans lequel la pièce de base (30, 40) est en alliage à base d'aluminium ou de titane ou de magnésium et dans lequel lors de l'étape d'addition de matière, la matière ajoutée (32+, 42+) est un alliage d'aluminium ou de titane ou de magnésium.

10. Elément de structure, destiné à une structure d'une construction, **caractérisé en ce qu'**il est réalisé en mettant en oeuvre le procédé objet de l'une quelconque des revendications précédentes.

11. Véhicule, dont la structure métallique comporte au moins un élément de structure (3, 4) réalisée selon le procédé selon l'une quelconque des revendications 1 à 9, le véhicule étant destiné à un transport terrestre, maritime ou aérien ou spatial.

## Patentansprüche

1. Verfahren zum Herstellen eines Strukturelements (3, 4) aus einem sogenannten metallischen Grundwerkstück (30, 40), wobei das Strukturelement eine Haut (31, 41) und mindestens eine Versteifung (32, 42) beinhaltet, wobei sich die Versteifung aus der Haut bis zu einem distalen Ende (32d, 42d) erstreckt, wobei das Verfahren die folgenden Schritte beinhaltet:
a) Erhalten eines Arbeitswerkstücks (30', 40') aus dem Grundwerkstück (30, 40), wobei das Grundwerkstück ein Blech ist, welches durch Gießen und danach Walzen erhalten wird;
b) Hinzufügen von Material (32+, 42+) auf das Arbeitswerkstück, um mindestens ein Versteifungsvormaterial (32', 42') zu bilden, das sich aus dem Arbeitswerkstück bis zu einem distalen Ende (32d, 42d) in einer Erstreckungsrichtung erstreckt, die das Arbeitswerkstück schneidet, wobei das distale Ende in einem Abstand (d₁), erster Erstreckungsabstand genannt, von dem Arbeitswerkstück angeordnet ist, wobei das Hinzufügen von Material durch additive Fertigung durch nacheinander Beigeben der elementaren Materialschichten durchgeführt wird;
c) Bearbeiten des Arbeitswerkstücks (30', 40') zum Ausdünnen des Arbeitswerkstücks um das in Schritt b) gebildete Versteifungsvormaterial herum, wobei das so ausgedünnte Arbeitswerkstück eine Haut (31, 41) bildet, die sich zwischen einer Innenoberfläche (31i, 41i) und einer Außenoberfläche (31e, 41e) erstreckt, wobei die Bearbeitung bewirkt, das Versteifungsvormaterial (32', 42') bis zur Innenoberfläche zu verlängern, um eine Versteifung (32, 42) zu erhalten, deren distales Ende (32d, 42d) sich gemäß einem zweiten Erstreckungsabstand (d₂)von der Innenoberfläche erstreckt, wobei der zweite Erstreckungsabstand (d₂) 1,5 mal größer als der erste Erstreckungsabstand (d₁) ist.

2. Verfahren zum Herstellen nach Anspruch 1, wobei das Arbeitswerkstück (30', 40') dem Grundwerkstück entspricht.

3. Verfahren zum Herstellen nach Anspruch 1, wobei der Schritt a) beinhaltet:
- das Anwenden einer thermomechanischen Behandlung auf das Grundwerkstück (30, 40) oder auf das Arbeitswerkstück (30', 40');
- und/oder eine Formgebung des Grundwerkstücks (30, 40).

4. Verfahren zum Herstellen nach Anspruch 3, wobei die Formgebung eine Verformung beinhaltet, um ein Arbeitswerkstück (, 40') in geschwungener Form zu erhalten.

5. Verfahren zum Herstellen nach Anspruch 4, wobei die thermomechanische Behandlung ein Lösungsglühen, gefolgt von einem Abschrecken beinhaltet.

6. Verfahren zum Herstellen nach einem der vorstehenden Ansprüche, welches nach dem Schritt c) ein Vergüten beinhaltet.

7. Verfahren zum Herstellen nach einem der vorstehenden Ansprüche, welches nach dem Schritt c) einen sogenannten Fertigbearbeitungsschritt beinhaltet.

8. Verfahren zum Herstellen nach einem der vorstehenden Ansprüche, wobei jede Werkstoffschicht nacheinander mit einer Dicke hinzugefügt wird, die zwischen 10 µm und 5 mm liegt.

9. Verfahren zum Herstellen nach einem der vorstehenden Ansprüche, wobei das Grundwerkstück (30, 40) aus einer Legierung auf Basis von Aluminium oder Titan oder Magnesium ist, und wobei beim Schritt des Hinzufügens von Material das hinzugefügte Material (32+, 42+) eine Legierung aus Aluminium oder aus Titan oder aus Magnesium ist.

10. Strukturelement, das für eine Struktur einer Konstruktion bestimmt ist, **dadurch gekennzeichnet, dass** es durch Umsetzen des Verfahrens nach einem der vorstehenden Ansprüche hergestellt wird.

11. Fahrzeug, dessen Metallstruktur mindestens ein Strukturelement (3, 4) beinhaltet, das gemäß dem Verfahren nach einem der Ansprüche 1 bis 9 hergestellt wird, wobei das Fahrzeug für den Land-, See-, oder Luft- oder Weltraumtransport bestimmt ist.

## Claims

1. A method of manufacturing a structural element (3, 4) from a so-called metal base piece (30, 40), the structural element comprising a skin (31, 41) and at least one stringer (32, 42), the stringer extending from the skin to a distal end (32d, 42d), the method comprising the steps of:
a) obtaining a workpiece (30', 40') from the base piece (30, 40), said base piece being a plate obtained by casting then rolling;
b) adding material to the workpiece (32+, 42+) so as to form at least one stringer blank (32', 42') extending from the workpiece to a distal end (32d, 42d) in a direction of extension secant to said workpiece; the distal end being arranged at a distance (d₁), known as the first extension distance, of said workpiece, material being added by additive manufacturing, successively adding elementary layers of material;
c) machining the workpiece (30', 40'), to thin the workpiece, around the blank formed in step b), the workpiece thus thinned forming a skin (31, 41), extending between an inner surface (31i, 41i) and an outer surface (31e, 41e), machining having the effect of extending the stringer blank (32', 42') to the inner surface, so as to obtain a stringer (32,42) whose distal end (32d, 42d) extends to a second extension distance (d₂) of the inner surface, the second extension distance (dz) being greater than 1.5 times the first extension distance (d₁).

2. Manufacturing method according to claim 1, wherein the workpiece (30', 40') corresponds to the base piece.

3. Manufacturing method according to claim 1, wherein step a) comprises:
- application of a thermomechanical treatment to the base piece (30, 40) or to the workpiece (30', 40');
- and/or forming of the base piece (30, 40).

4. Manufacturing method according to claim 3, wherein the shaping comprises a deformation to obtain a workpiece (40') of curved shape.

5. Manufacturing method according to claim 4, wherein the thermomechanical treatment comprises solution heat treatment followed by quenching.

6. Manufacturing method according to any one of the preceding claims, comprising, following step c), aging.

7. Manufacturing method according to any one of the preceding claims, comprising, following step c), a so-called finishing machining step.

8. Manufacturing method according to any one of the preceding claims, wherein each layer of successively added material has a thickness of between 10 microns and 5 mm.

9. Manufacturing method according to any one of the preceding claims, wherein the base piece (30, 40) is an alloy based on aluminum or titanium or magnesium and in which, during the material addition step, the added material (32+, 42+) is an alloy of aluminum or titanium or magnesium.

10. Structural element, intended for a structure for a construction, **characterized in that** it is produced by using the method that is the subject of any one of the preceding claims.

11. Vehicle, the metal structure of which comprises at least one structural element (3, 4) made using the method according to any one of claims 1 to 9, the vehicle being intended for land, sea or air or spatial transport.
